# EUROPEAN PATENT SPECIFICATION

(11) **EP 2 546 704 B1**
(45) Date of publication and mention of the grant of the patent: **27.08.2014**
(21) Application number: 12175604.3
(22) Date of filing: 09.07.2012
(51) Int. Cl.: G03G 21/16

(54) **Image forming apparatus**
Bilderzeugungsvorrichtung
Appareil de formation d'images

(30) Priority: 11.07.2011 KR 20110068204
(43) Date of publication of application: 16.01.2013
(73) Proprietor: Samsung Electronics Co., Ltd., Suwon-si, Gyeonggi-do, 443-742 (KR)
(72) Inventor: Kim, Tae Han, Gyeonggi-Do (KR); You, Yun Ki, Gyeonggi-do (KR); Jeon, Yang Bae, Gyeonggi-do (KR)
(74) Representative: Taor, Simon Edward William

(56) References cited:
- US-A- 4 575 223
- US-A- 5 860 044
- US-A1- 2008 181 698

## Description

Embodiments of the invention relate to an image forming apparatus capable of scanning an image of a document.

An image forming apparatus refers to a machine for formation of an image on a printing medium. Examples of such an image forming apparatus include a scanner, a printer, a copier, a facsimile device, and a combination device integrating functions thereof.

Among the examples of the image forming apparatus, the image forming apparatus capable of scanning an image from a document includes a main body, a document board on which an optical window is arranged to scan the document while being disposed at an upper side of the main body, and a document board cover pivotably mounted at the document board to selectively open and close the optical window of the document board.

When paper is jammed within the main body in the image forming apparatus, the jammed paper must be removed. For this reason, the main body is opened at an upper side thereof and the document board is pivotably mounted to the main body so as to open the upper side of the main body by pivoting the document board.

Also, the image forming apparatus known from US-A-5860044 includes a shock absorber to prevent generation of impact due to collision between the document board and the main body in the course of closing the upper side of the main body by pivoting of the document board.

In an aspect of one or more alternative embodiments, there is provided in accord with claim 1 an image forming apparatus equipped with a shock absorber to reduce impact capable of being generated when an upper side of a main body is closed through a document board.

Advantageous embodiments are provided in the dependent claims.

These and/or other aspects will become apparent and more readily appreciated from the following description of embodiments, taken in conjunction with the accompanying drawings of which:
FIG. 1 is a perspective view illustrating an image forming apparatus according to an embodiment;
FIG. 2 is an exploded perspective view illustrating one shock absorber applied to the image forming apparatus according to an embodiment;
FIG. 3 is a side view illustrating one guide member applied to the image forming apparatus according to an embodiment;

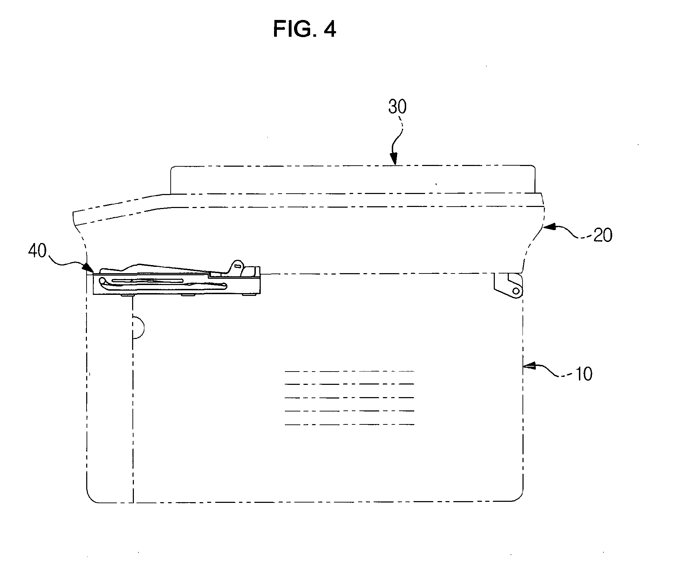

FIGS. 4 to 6 are schematic views illustrating operation of the image forming apparatus according to an embodiment; and
FIGS. 7 to 9 are side views illustrating one guide member applied to an image forming apparatus according to embodiments.

Reference will now be made in detail to embodiments, examples of which are illustrated in the accompanying drawings, wherein like reference numerals refer to like elements throughout.

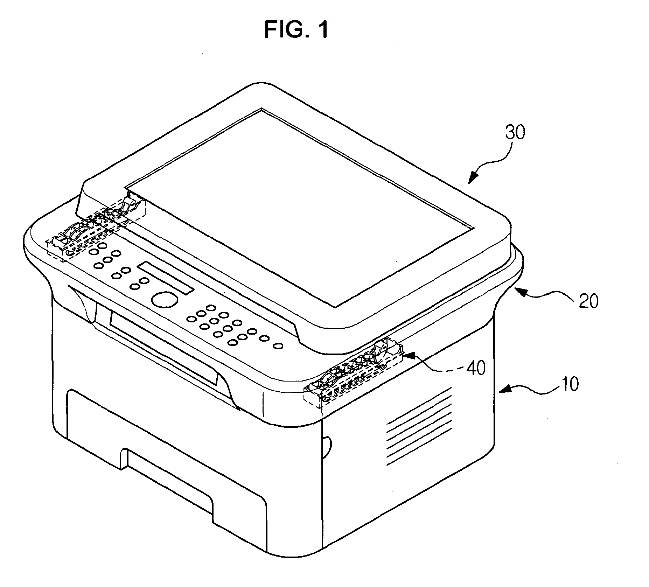

As shown in FIG. 1, an image forming apparatus according to an embodiment includes a main body 10 defining an external appearance thereof, a document board 20 disposed at an upper side of the main body 10 and formed with an optical window (not shown) to scan a document, and a document board cover 30 pivotably mounted at the document board 20 to open and close the optical window.

The main body 10 is opened at the upper side thereof so as to remove, when paper is jammed within the main body 10, the jammed paper. The document board 20 is pivotably mounted, at one end thereof, to the main body 10 so as to open and close the upper side of the main body 10 while being pivoted.

When the upper side of the main body 10 is closed by the document board 20, the main body 10 is simultaneously affected by user's pressing force and gravity of the document board 20 at a point in time when closing thereof is terminated, thereby increasing a pivoting speed of the document board 20. In addition, when the upper side of the main body 10 is closed by rapid pivoting of the document board 20, it may be possible to generate impact due to collision between the document board 20 and the main body 10. Accordingly, the image forming apparatus includes shock absorbers 40 to reduce the impact generated when the document board 20 is closed.

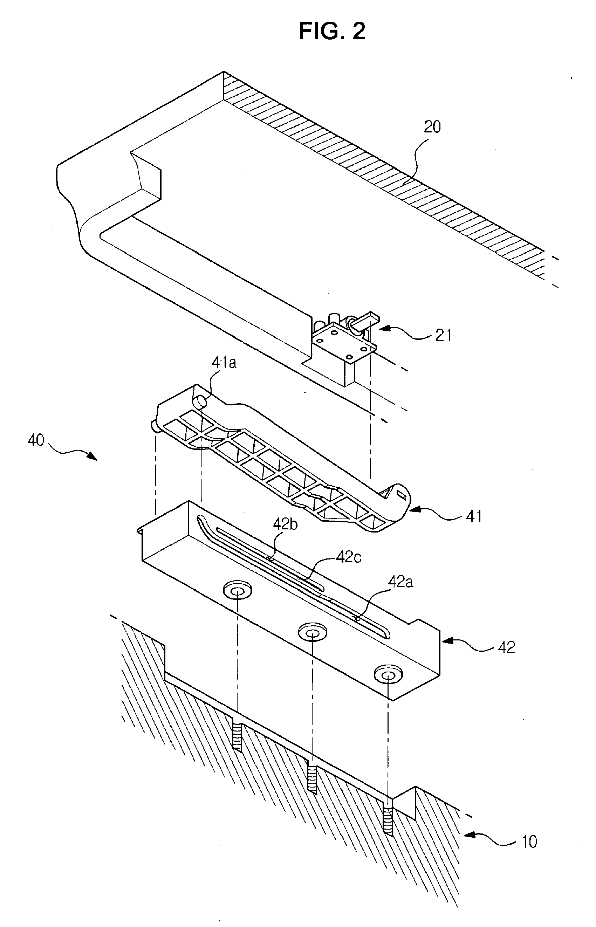

As shown in FIG. 2, each of the shock absorbers 40 includes a link 41 pivotably mounted, at a first end thereof, to the document board 20 while guide protrusions 41a bilaterally protrude at a second end thereof opposed to the first end, and a guide slot 42a formed so that each guide protrusion 41a of the link 41 is movable. The guide protrusion 41a moves from a first end side of the guide slot 42a to a second end side thereof opposed to the first end side as the document board 20 closes the upper side of the main body 10. That is, the guide protrusion 41a is positioned at the first end side of the guide slot 42a at a point in time when closing of the upper side of the main body 10 begins by the document board 20, while being positioned at the second end side of the guide slot 42a at a point in time when closing of the upper side of the main body 10 is terminated by the document board 20.

Each guide protrusion 41a has a circular shape in section to be rotated within the guide slot 42a and is formed to have a diameter slightly greater than a width of the guide slot 42a. A guide member 42 is provided with the guide slot 42a. The link 41 and the guide member 42 are made of a resin material which is a slightly elastically deformable so as to allow the guide protrusion 41a having the diameter relatively greater than the width of the guide slot 42a to be moved within the guide slot 42a.

The first end of the link 41 is pivotably mounted at the document board 20 through a hinge unit 21 provided at a position spaced apart from a rotational ceriter of the document board 20 by a determined distance. The guide slot 42a is horizontally arranged at the guide member 42 which is mounted lengthwise at the main body 10 in a horizontal direction.

The guide slot 42a allows the second end side of the guide slot 42a to apply a relatively higher pressure to the corresponding guide protrusion 41a, compared with the first end side of the guide slot 42a. That is, the pressure applied to the guide protrusion 41a is higher at the point in time when closing of the upper side of the main body 10 is terminated by the document board 20 than at the point in time when closing of the upper side of the main body 10 begins by the document board 20. When the guide slot 42a is configured as described above, a movement speed of the guide protrusion 41a is reduced at the point in time when closing of the upper side of the main body 10 is terminated, and thus the pivoting speed of the document board 20 is reduced. In other words, it may be possible to restrict the movement speed of the guide protrusion 41a and the pivoting speed of the document board 20 below a certain speed. Consequently, the impact generated at the point in time when closing of the upper side of the main body 10 is terminated is decreased.

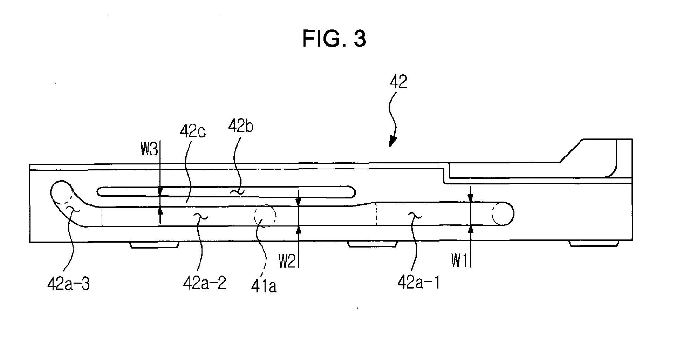

In an embodiment, the guide slot 42a includes a first guide portion 42a-1 formed to have a first width W₁ at the first end side of the guide slot 42a so as to apply a first pressure to the corresponding guide protrusion 41a, and a second guide portion 42a-2 formed to have a second width W2 relatively smaller than the first width W₁ at the second end side of the guide slot 42a so as to apply a second pressure higher than the first pressure to the guide protrusion 41a, as shown in FIG. 3. In some examples, the pressure from the first guide portion 42a-1 is a uniform pressure.

Also, the guide member 42 is arranged with an auxiliary slot 42b which extends in parallel with the second guide portion 42a-2 so as to correspond to the second guide portion 42a-2, such that an elastic support portion 42c is formed between the guide slot 42a and the auxiliary slot 42b so as to elastically support the guide protrusion 41a. Thus, a side of the second guide portion 42a-2 is elastically deformable. The elastic support portion 42c has a width W3 which is gradually thicker upon progression from the first end side of the guide slot 42a to the second end side thereof. The width of the elastic support portion 42c determines the force required to deform the elastic support portion 42c.

As described above, the guide member 42 is made of resin material. Thus, as the elastic support portion 42c arranged at the guide member 42 becomes thinner, elastic deformation thereof becomes easier, whereas as the elastic support portion 42c becomes thicker, elastic deformation thereof becomes more difficult. Consequently, a thin piece of the elastic support portion 42c applies a relatively smaller pressure to the corresponding guide protrusion 41a, whereas a thick piece of the elastic support portion 42c applies a relatively higher pressure to the guide protrusion 41a. Therefore, the second guide portion 42a-2 applies a pressure, which is gradually increased upon progression from the first end side of the guide slot 42a to the second end side thereof, to the guide protrusion 41a through the elastic support portion 42c.

The second end side of the guide slot 42a is arranged with a stopper portion 42a-3 in order for movement of the corresponding guide protrusion 41a to be stopped, thereby stopping the pivoting of the document board 20. In an embodiment, the stopper portion 42a-3 extends at an angle to the second guide portion e.g. in an arc (arcuate) shape from the second guide portion 42a-2, thereby allowing force acting on the guide protrusion 41a to be dispersed and eliminated. In some examples, the arcuate shape of the stopper portion 42a-3 (e.g. curves) upwardly.

Hereinafter, the following description will given of operation of one shock absorber applied to the image forming apparatus according to an embodiment.

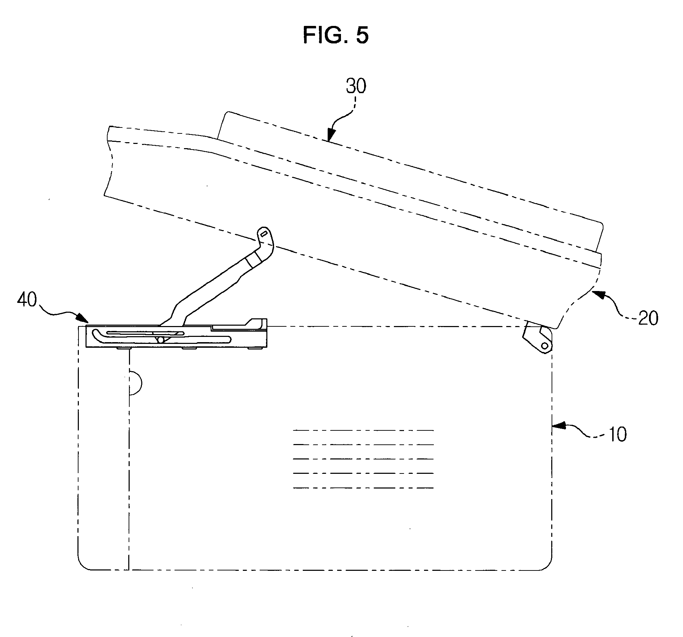

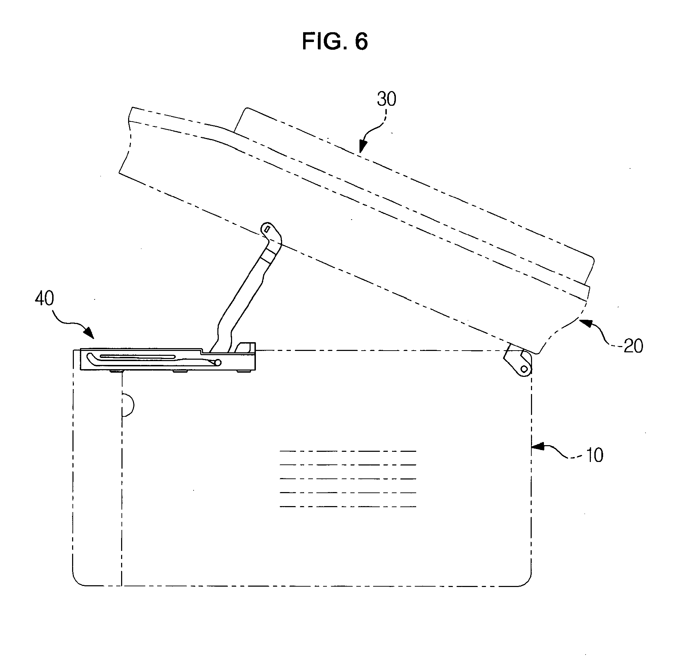

First, each guide protrusion 41a is positioned at an end of first end side of the guide slot 42a in a state in which the upper side of the main body 10 is opened, as shown in FIG. 6. In this case, when a user forcibly pivots the document board 20, the guide protrusion 41a is moved to the second end side of the guide slot 42a along the guide slot 42a, as shown in FIG. 5. In an embodiment, since the first guide portion 42a-1 is formed so as to allow the first width W₁ thereof to be uniform, the first pressure applied to the guide protrusion 41a is uniformly maintained while the guide protrusion 41a moves along the first guide portion 42a-1.

Subsequently, when the guide protrusion 41a passes through the first guide portion 42a-1 and moves to the second guide portion 42a-2, the guide protrusion 41a is elastically supported by the elastic support portion 42c. As described above, the second guide portion 42a-2 applies the second pressure, which is gradually increased upon progression from the first end side of the guide slot 42a to the second end side thereof, to the guide protrusion 41a through the elastic support portion 42c, such that the movement speed of the guide protrusion 41a is reduced while moving along the second guide portion 42a-2, thereby restricting the movement speed of the guide protrusion 41a and the pivoting speed of the document board 20 below a certain speed.

The guide protrusion 41a passes through the second guide portion 42a-2 and moves to the stopper portion 42a-3. Since the stopper portion 42a-3 is formed in the arc shape as described above, the force acting on the guide protrusion 41a is dispersed through a surface of the stopper portion 42a-3 and is considerably eliminated. Accordingly, the movement speed of the guide protrusion 41a is rapidly reduced, and thus the pivoting speed of the document board 20 is rapidly reduced as well. Consequently, impact due to collision between the document board 20 and the main body 10 is nearly eliminated or is restricted at a very little level.

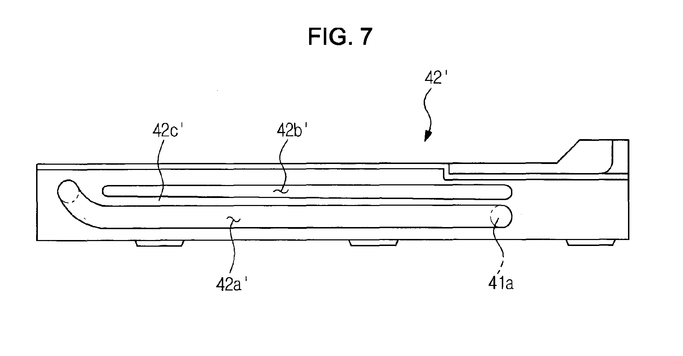

In an embodiment, the auxiliary slot 42b is formed to correspond to the second guide portion 42a-2 of the guide slot 42a. However, an embodiment is not limited thereto, and a guide member 42' may be provided with an auxiliary slot 42b' formed to correspond to the entirety of a guide slot 42a', as shown in FIG. 7. A guide protrusion 41a' is elastically supported by an elastic support portion 42c'.

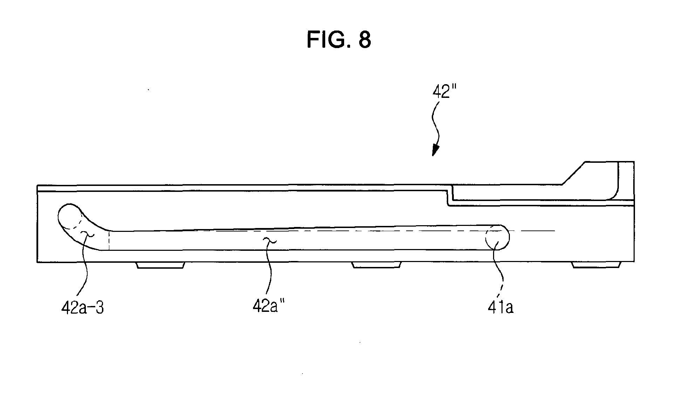

Also, a guide slot 42a" arranged at a guide member 42" may have a width which is gradually decreased upon progression from a first end side of the guide slot 42a" to a second end side thereof without the configuration corresponding to the auxiliary slot 42b, thereby enabling the pressure applied to the guide protrusion 41a to be increased, as shown in FIG. 8.

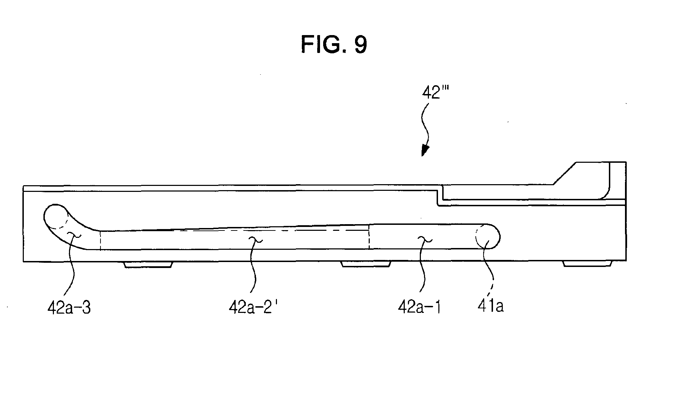

In addition, the second guide portion 42a-2 allows the pressure applied to the guide protrusion 41a to be gradually increased by gradually increasing the thickness of the elastic support portion 42c arranged at the auxiliary slot 42b in an embodiment. However, an embodiment is not limited thereto, and a second guide portion 42a-2' may have a width which is gradually decreased upon progression from a first end side of a guide slot 42a"' to a second end side thereof without the configuration corresponding to the auxiliary slot 42b, thereby enabling the pressure applied to the guide protrusion 41a to be increased, as shown in FIG. 9.

Furthermore, the guide slot 42a is arranged at the guide member 42 fixed to the main body 10 in an embodiment. However, an embodiment is not limited thereto, and a configuration corresponding to the guide slot may also be formed at the main body 10. As is apparent from the above description, a pressure applied to each guide protrusion is increased through a guide slot as a document board closes an upper side of a main body, thereby restricting a movement speed of the guide protrusion and a pivoting speed of the document board. As a result, it may be possible to considerably reduce impact capable of being generated due to collision between the document board and the main body.

Also, since the collision between the document board and the main body and the impact according to the same may be reduced simply by changing a shape of the guide slot, it may be possible to prevent an increase in production costs encountered when additional parts are used.

Although a few embodiments have been shown and described, it would be appreciated by those skilled in the art that changes may be made in these embodiments without departing from the scope of the disclosure, which is defined in the claims.

## Claims

1. An image forming apparatus comprising:
a main body (10);
a document board (20) pivotably mounted to the main body (10) so as to open and close an upper side of the main body (10) while being pivoted; and
a shock absorber configured to reduce impact generated when the document board closes the upper side of the main body, wherein:
the shock absorber (40) comprises a link (41) mounted, at a first end thereof, to the document board (20), and one or more guide protrusions (41a) formed at a second end thereof opposed to the first end, and a guide member (42, 42', 42", 42"') provided with a guide slot (42a, 42a', 42a", 42a"') formed so that each guide protrusion (41a) is movable, and wherein the guide protrusion (41a) is configured to move along the guide slot (42a, 42a', 42a", 42a"') on closing of the document board; **characterised in that**:
the guide slot (42a, 42a', 42a", 42a"') has a width which is gradually decreased upon progression from a first end side of the guide slot (42a, 42a', 42a", 42a"') to a second end side thereof to apply a pressure to the guide protrusion (41a) which gradually increases upon progression along the guide slot (42a, 42a', 42a", 42a"') when closing the upper side of the main body (10).

2. The image forming apparatus according to claim 1, further comprising:
an auxiliary slot (42b, 42b') which extends substantially in parallel with the guide slot (42a, 42a', 42a", 42a"'), thereby forming an elastic support portion (42c, 42c') between the guide slot (42a, 42a', 42a", 42a"') and the auxiliary slot (42b, 42b') so as to elastically support each guide protrusion (41a),
wherein the elastic support portion (42c, 42c') has a width which is gradually increased upon progression from a first end side of the guide slot (42a, 42a', 42a", 42a"') to a second end side thereof.

3. The image forming apparatus according to claim 1, wherein:
the guide slot (42a, 42a', 42a", 42a"') comprises a first guide portion (42a-1) arranged at a first end side to transfer a uniform pressure to each guide protrusion (41a), and a second guide portion (42a-2, 42a-2') to apply pressure to the guide protrusion (41a), which is configured to gradually increase upon progression from the first end side to the second end side.

4. The image forming apparatus according to claim, 3, further comprising:
an auxiliary slot (42b, 42b') which extends substantially in parallel with the second guide portion (42a-2), thereby forming an elastic support portion (42c, 42c') between the second guide portion (42a-2) and the auxiliary slot (42b, 42b') so as to elastically support each guide protrusion (41a),
wherein the elastic support portion (42c, 42c') has a width which gradually increases upon progression from the first end side of the guide slot to the second end side thereof.

5. The image forming apparatus according to claim 3 or 4, wherein the second guide portion (42a-2) has a width which gradually decreases upon progression from the first end side of the guide slot (42a, 42a', 42a", 42a"') to the second end side thereof.

6. The image forming apparatus according to any one of the preceding claims, wherein the guide slot (42a, 42a', 42a", 42a"') further comprises a stopper portion (42a-3) which extends in an arc shape from the second end side of the guide slot (42a, 42a', 42a", 42a'").

7. The image forming apparatus according to any one of the preceding claims, further comprising a guide member provided with the guide slot,
wherein at least one of the guide member and each guide protrusion is made of an elastically deformable material.

## Patentansprüche

1. Bilderzeugungsvorrichtung, die Folgendes umfasst:
ein Hauptgehäuse (10);
eine Dokumentenplatte (20), die schwenkbar am Hauptgehäuse (10) montiert ist, um eine Oberseite des Hauptgehäuses (10) zu öffnen und zu schließen, wenn sie geschwenkt wird; und
einen Stoßdämpfer, der zum Reduzieren der Stoßwirkung des Schließens der Dokumentenplatte auf der Oberseite des Hauptgehäuses konfiguriert ist, wobei:
der Stoßdämpfer (40) ein Verbindungsglied (41), das mit seinem ersten Ende an der Dokumentenplatte (20) montiert ist, und ein oder mehrere an seinem zweiten Ende gegenüber dem ersten Ende ausgebildete Führungsvorsprünge (41a) und ein mit einem Führungsschlitz (42a, 42a', 42a", 42a"') versehenes Führungselement (42, 42', 42", 42"') umfasst, so ausgebildet, dass jeder Führungsvorsprung (41a) beweglich ist, und wobei der Führungsvorsprung (41a) für eine Bewegung entlang dem Führungsschlitz (42a, 42a', 42a'', 42a" ') beim Schließen der Dokumentenplatte konfiguriert ist; **dadurch gekennzeichnet, dass**:
der Führungsschlitz (42a, 42a', 42asz, 42a""") eine Breite hat, die bei seinem Verlauf von einer ersten Endseite des Führungsschlitzes (42a, 42a', 42a'', 42a"') zu seiner zweiten Endseite allmählich abnimmt, um einen Druck auf den Führungsvorsprung (41a) aufzubringen, der bei seinem Verlauf entlang dem Führungsschlitz (42a, 42a', 42a'', 42a'") allmählich zunimmt, wenn die Oberseite des Hauptgehäuses (10) geschlossen wird.

2. Bilderzeugungsvorrichtung nach Anspruch 1, die ferner Folgendes umfasst:
einen Zusatzschlitz (42b, 42b'), der im Wesentlichen parallel zu dem Führungsschlitz (42a, 42a', 42a", 42a"') verläuft, um dadurch einen elastischen Auflageteil (42c, 42c') zwischen dem Führungsschlitz (42a, 42a', 42a'', 42a"') und dem Zusatzschlitz (42b, 42b') zu bilden, um jeden Führungsvorsprung (41a) elastisch zu tragen,
wobei der elastische Auflageteil (42c, 42c') eine Breite hat, die bei seinem Verlauf von einer ersten Endseite des Führungsschlitzes (42a, 42a', 42a", 42a"') zu seiner zweiten Endseite allmählich zunimmt.

3. Bilderzeugungsvorrichtung nach Anspruch 1, wobei:
der Führungsschlitz (42a, 42a', 42a", 42a"') einen ersten Führungsabschnitt (42a-1), der an einer ersten Endseite angeordnet ist, um einen gleichmäßigen Druck auf jeden Führungsvorsprung (41a) zu übertragen, und einen zweiten Führungsabschnitt (42a-2, 42a-2') zum Aufbringen von Druck auf den Führungsvorsprung (41a) umfasst, der so konfiguriert ist, dass er bei seinem Verlauf von der ersten Endseite zur zweiten Endseite allmählich zunimmt.

4. Bilderzeugungsvorrichtung nach Anspruch 3, die ferner Folgendes umfasst:
einen Zusatzschlitz (42b, 42b'), der im Wesentlichen parallel zum zweiten Führungsabschnitt (42a-2) verläuft, um dadurch einen elastischen Auflageteil (42c, 42c') zwischen dem zweiten Führungsabschnitt (42a-2) und dem Zusatzschlitz (42b, 42b') zu bilden, um jeden Führungsvorsprung (41a) elastisch zu tragen,
wobei der elastische Auflageteil (42c, 42c') eine Breite hat, die bei seinem Verlauf von der ersten Endseite des Führungsschlitzes zu seiner zweiten Endseite allmählich zunimmt.

5. Bilderzeugungsvorrichtung nach Anspruch 3 oder 4, wobei der zweite Führungsabschnitt (42a-2) eine Breite hat, die bei seinem Verlauf von der ersten Endseite des Führungsschlitzes (42a, 42a', 42a'', 42a''') zu seiner zweiten Endseite allmählich abnimmt.

6. Bilderzeugungsvorrichtung nach einem der vorherigen Ansprüche, wobei der Führungsschlitz (42a, 42a', 42a'', 42a''') ferner einen Stoppabschnitt (42a-3) aufweist, der sich bogenförmig von der zweiten Endseite des Führungsschlitzes (42a, 42a', 42a'', 42a''') erstreckt.

7. Bilderzeugungsvorrichtung nach einem der vorherigen Ansprüche, die ferner ein mit dem Führungsschlitz versehenes Führungselement umfasst,
wobei das Führungselement und/oder jeder Führungsvorsprung aus einem elastisch verformbaren Material gebildet ist/sind.

## Revendications

1. Appareil de formation d'images, comprenant :
un corps principal (10) ;
un plateau à documents (20) monté de façon pivotante sur le corps principal (10) de sorte à ouvrir et fermer un côté supérieur du corps principal (10) pendant qu'il est pivoté ; et
un amortisseur de chocs configuré de façon à réduire l'impact généré lorsque le plateau à documents ferme le côté supérieur du corps principal, cas dans lequel :
l'amortisseur de chocs (40) comprend une liaison (41) montée, au niveau d'une première extrémité de celle-ci, sur le plateau à documents (20), et une ou plusieurs saillies de guidage (41a) formées au niveau d'une deuxième extrémité de celle-ci, qui est opposée à la première extrémité, et un élément de guidage (42, 42', 42", 42"') muni d'une fente de guidage (42a, 42a', 42a", 42a''') laquelle est formée de sorte que chaque saillie de guidage (41a) soit apte à se déplacer, et cas dans lequel la saillie de guidage (41a) est configurée de façon à se déplacer le long de la fente de guidage (42a, 42a', 42a'', 42a''') lors de la fermeture du plateau à documents ; **caractérisé en ce que** :
la fente de guidage (42a, 42a', 42a", 42a"') a une largeur qui est en diminution graduelle lors d'une progression depuis un côté de première extrémité de la fente de guidage (42a, 42a', 42a'', 42a''') vers un côté de deuxième extrémité de celle-ci afin d'appliquer une pression sur la saillie de guidage (41a) qui augmente graduellement lors d'une progression le long de la fente de guidage (42a, 42a', 42a'', 42a''') lors de la fermeture du côté supérieur du corps principal (10).

2. Appareil de formation d'images selon la revendication 1, comprenant en outre :
une fente auxiliaire (42b, 42b') qui s'étend sensiblement en parallèle à la fente de guidage (42a, 42a', 42a'', 42a'''), ce qui permet par conséquent de former une portion de support élastique (42c, 42c') entre la fente de guidage (42a, 42a', 42a'', 42a''') et la fente auxiliaire (42b, 42b') de sorte à soutenir de façon élastique chaque saillie de guidage (41a),
cas dans lequel la portion de support élastique (42c, 42c') a une largeur qui est en augmentation graduelle lors d'une progression depuis un côté de première extrémité de la fente de guidage (42a, 42a', 42a'', 42a''') vers un côté de deuxième extrémité de celle-ci.

3. Appareil de formation d'images selon la revendication 1 :
la fente de guidage (42a, 42a', 42a'', 42a''') comportant une première portion de guidage (42a-1) agencée au niveau d'un côté de première extrémité afin de transférer une pression uniforme à chaque saillie de guidage (41a), et une deuxième portion de guidage (42a-2, 42a-2') afin d'appliquer une pression sur la saillie de guidage (41a), qui est configurée de façon à augmenter graduellement lors d'une progression depuis le côté de première extrémité vers le côté de deuxième extrémité.

4. Appareil de formation d'images selon la revendication 3, comprenant en outre :
une fente auxiliaire (42b, 42b') qui s'étend sensiblement en parallèle à la deuxième portion de guidage (42a-2), ce qui permet par conséquent de former une portion de support élastique (42c, 42c') entre la deuxième portion de guidage (42a-2) et la fente auxiliaire (42b, 42b') de sorte à soutenir de façon élastique chaque saillie de guidage (41a),
cas dans lequel la portion de support élastique (42c, 42c') a une largeur qui augmente graduellement lors d'une progression depuis le côté de première extrémité de la fente de guidage vers le côté de deuxième extrémité de celle-ci.

5. Appareil de formation d'images selon la revendication 3 ou 4, la deuxième portion de guidage (42a-2) ayant une largeur qui diminue graduellement lors d'une progression depuis le côté de première extrémité de la fente de guidage (42a, 42a', 42a'', 42a''') vers le côté de deuxième extrémité de celle-ci.

6. Appareil de formation d'images selon l'une quelconque des revendications précédentes, la fente de guidage (42a, 42a', 42a'', 42a''') comportant en outre une portion à butée (42a-3) laquelle s'étend suivant une forme en arc depuis le côté de deuxième extrémité de la fente de guidage (42a, 42a', 42a'', 42a''').

7. Appareil de formation d'images selon l'une quelconque des revendications précédentes, comprenant en outre un élément de guidage qui est doté de la fente de guidage,
cas dans lequel au moins l'un des postes suivants, à savoir l'élément de guidage et chaque saillie de guidage, est réalisé en une matière élastiquement déformable.
